# EUROPEAN PATENT APPLICATION

(11) **EP 2 822 087 A1**
(43) Date of publication of application: **07.01.2015**
(21) Application number: 14175206.3
(22) Date of filing: 01.07.2014
(51) Int. Cl.: H01M 10/30, H01M 10/42, H01M 2/20

(54) **Nickel-zinc battery assembly and manufacturing method thereof**

(30) Priority: 02.07.2013 CN 201310274404; 09.02.2014 US 201414176125
(71) Applicant: Hangzhou Neucell Energy Co., Ltd., Hangzhou, Zhejiang 311121 (CN)
(72) Inventor: MA, Fuyan, 311121 Hangzhou (CN); YE, Jingrong, 311121 Hangzhou (CN); HE, Tailiang, 3111121 Hangzhou (CN); PAN, Weijie, 3111121 Hangzhou (CN)
(74) Representative: Vossius & Partner

(57) **Abstract**

The present invention discloses a nickel-zinc battery assembly, which is adapted to be used in practice, wherein the nickel-zinc battery assembly comprises a plurality of nickel-zinc batteries, a plurality of diodes and a plurality of connecting sheets, wherein the diodes are stridden across the batteries and electronically connected to the nickel-zinc batteries respectively, and the connecting sheets are provided between every two neighboring batteries respectively, wherein the positive end of the diode is connected to the cathode of the nickel-zinc battery, and the negative end of the diode is connected to the anode of the nickel-zinc battery. Because the nickel-zinc battery assembly of the present invention is able to provide a unidirectional conductivity from the diodes so as to prevent the batteries being damaged such that the batteries having different discharge performances can be assembled to overcome the bad discharge performances and short cycle life resulted from the different batteries having different discharge performances in the art (Fig. 1).

## Description

### NOTICE OF COPYRIGHT

A portion of the disclosure of this patent document contains material which is subject to copyright protection. The copyright owner has no objection to any reproduction by anyone of the patent disclosure, as it appears in the United States Patent and Trademark Office patent files or records, but otherwise reserves all copyright rights whatsoever.

### BACKGROUND OF THE PRESENT INVENTION

### FIELD OF INVENTION

The present invention relates to a battery, and more particularly to a protective discharging method for a nickel-zinc battery assembly. Further, the present invention provides a battery assembly and a manufacturing method thereof.

### DESCRIPTION OF RELATED ARTS

A single nickel-zinc battery generally has a cycle life more than 1000 cycles, but a battery assembly made from a plurality of nickel-zinc batteries has a very low cycle life, and sometimes it has a cycle file which is even as low as dozens of circles. The reason is that the nickel-zinc batteries are damaged during the discharging, which is due to the discordance among the nickel-zinc batteries. Although a single battery has a long cycle life, in case that a plurality of these batteries are assembled for discharging and energy supply, because these batteries have different discharge performances and the battery which has a lower discharging voltage than other batteries is easily damaged due to the over-discharging thereof such that the overall battery assembly cannot work.

In the art, this problem is generally settled by providing a circuit protection element. The cycle life can be substantially improved by controlling from electrical circuits, but which results in the following problems :
(1) The electrical circuits generally lead to high production cost. A lithium battery is a typical example, if over-discharged, it is easy to damage, so any lithium battery assembly, even a single lithium battery has a protective circuit to prevent itself being over-discharged or over-charged. And the protective electrical circuits take up a large portion of the total cost of a lithium battery assembly. Particularly, when an overload protection is necessary to provide a protective means for a large current, the controlling circuits for the lithium battery result in a very high cost and the problems, such as the heat resulted from the large current, lead to a relative big size of the controlling panel, which substantially reduces the primary energy density of the lithium battery assembly.
(2) Being hard to use, if there is a large current, the circuit will be cut off. When the protective electrical circuit is used for the overload, the protective electrical circuit is involved in the whole process of discharging. Sometime the battery assembly is able to generate a very large transient current in practice, if the threshold of the allowable current is lower than the transient current (the protective electrical circuit for a large current is expensive), the whole circuit may be cut off such that the battery assembly can do not work. For example, as an electric tool, an electrical drill requires a current up to 10-20A, whereas when the electrical drill is blocked, it requires a current up to 50-60A, even up to 70-80A, and if the threshold of the allowable current is lower than this current, the electrical drill cannot work or the electrical drill cannot provide a good effect of drilling. On the other hand, a protective electrical circuit for larger currents may be very expensive.
(3) The charge of the battery assembly cannot be completely released, which results in the accumulation of charge in one or more batteries of the battery assembly and the battery failure. With a protective electrical circuit, when the battery having a minimized capacity reach the threshold of voltage, the battery stops discharging and other batteries having a larger capacity do not completely discharge such that charges are accumulated in the batteries, similar to "memory effect", which results in the consequence that the batteries are over-charging or the capacity for discharging is lower and lower. In order to utilize the portion of the accumulated capacity, in high-end applications, a branch circuit or so-called energy balancing element is added in the protective circuit to achieve the purpose. But Regardless of which method leads to a considerable cost, which is difficult to accept in practice.

So a single nickel-zinc battery even has a high cycle life, for example 1000 cycles, but when a plurality of nickel-zinc batteries are assembled to define a battery assembly, the battery assembly only has a very low cycle life which may be tens of cycles. So the existing nickel-zinc battery assembly has the disadvantages of bad discharging performance and low cycle life.

### SUMMARY OF THE PRESENT INVENTION

The present invention is advantageous in that it provides a nickel-zinc battery arrangement, wherein the nickel-zinc battery arrangement comprises a nickel-zinc battery and a diode connected to the nickel-zinc battery, wherein the nickel-zinc battery arrangement is adapted to be used for manufacturing a nickel-zinc battery assembly.

Another advantage of the invention is to provide a nickel-zinc battery assembly which has an excellent discharge performance and a long cycle life and is low in cost so as to overcome the problems that the current nickel-zinc battery assembly assembled by nickel-zinc batteries has a bad discharge performance and a short cycle life.

Another advantage of the invention is to provide a nickel-zinc battery assembly, wherein the nickel-zinc battery assembly is able to solve the problem of the inconsistence among the batteries of the current nickel-zinc battery assembly, which is unavoidable during the nickel-zinc battery assembly being used and is eliminated by providing a diode herein.

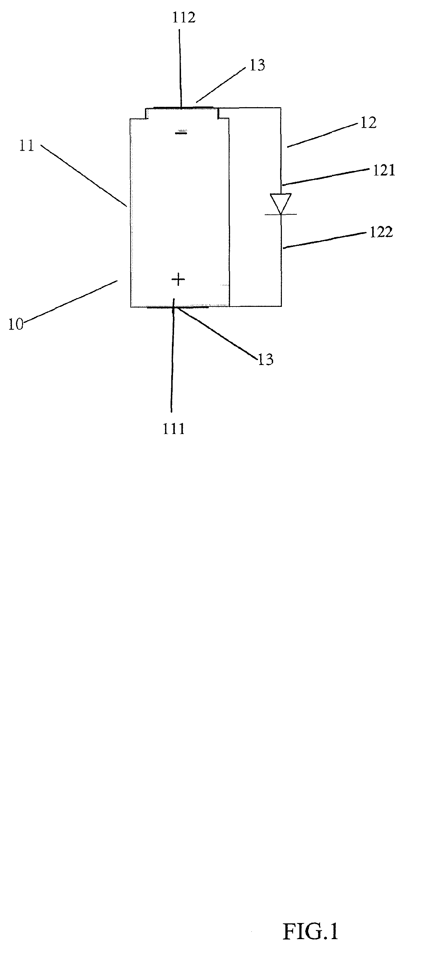

Another advantage of the invention is to provide a method for eliminating the inconsistence, which comprises a step of connecting the positive end of the diode to the cathode of the nickel-zinc battery and a step of connecting the negative end of the diode to the negative of the nickel-zinc battery, as shown in Fig.1.

Fig.1 is a schematic diagram of the nickel-zinc battery and the diode, illustrates that the nickel-zinc battery is connected to the diode.

By this simple protection method for discharging of the nickel zinc battery, the following technical effects are achieved in practice:
(1) a protection for the battery having a poor discharging capacity, that is, when the voltage of the battery having a poor discharging capacity reaches the threshold of the discharge voltage, the battery stops discharging or reduces the discharging speed, and other batteries having a better discharging capacity keep discharging;
(2) the protective electrical circuit doesn't apply any influence on the battery assembly when all of the batteries from the battery assembly are under a normal working state;
(3) the power consumption of the protective electrical circuit is low to milliampere level, that is, the protective electrical has a very low power consumption such that when the battery assembly are unused for a long time, each of the batteries from the battery assembly do not run out of energy;
(4) the electrical for the battery assembly don't have to be cut off, that is, break circuits don't have to be used similar to a protect panel having a threshold of allowable current in practice;
(5) lower cost of product.

The above technical effects are achieved depending on the properties of the diode. According to the connections as shown in Fig.1, the diode is generally cut off, only when the voltage applied on the negative end of the diode is higher than the break-over voltage of the diode, the diode is activated to regulate and control the overall circuit for the battery assembly. Therefore, in general, the diode for the nickel-zinc battery assembly doesn't work or is under a un-communicated state to effectively minimize the limitation from the controlling panel for the battery assembly and make the battery assembly more fully discharge; and when the battery having a poor discharging capacity need to be protected, the diode is capable to provide a protection timely and the current flowing through the diode is automatically adjusted according to the degree of protection.

The diode is one of the best basic electronic components, which is low in price and stable in performance. The existing diodes on the market comprise silicon diodes, germanium diodes and Schottky Barrier Diodes, and whose basic properties see table 1.

**Table 1: Comparisons among commonly used diodes on the market**

| Type of diode | Forward break-over voltage | Advantage | Disadvantage |
|---|---|---|---|
| silicon diode | 0.7 - 0.9V | Low in price and energy consumption | High break over voltage |
| germanium diode | 0.3 - 0.5V | Low break-over voltage | High energy consumption |
| Schottky Barrier Diode | 0.3 - 0.5V | Low break-over voltage, low energy consumption, stable | High in price |

By doing a lot of testing, we found that the characteristics of the diode are suitable for the nickel-zinc battery. In this way, a plurality of nickel-zinc batteries having different discharge performances is allowed to be assembled to overcome the problems that a battery assembly has a poor discharge performance and a short cycle life in the art, which are resulted from the inconsistent discharge performances of the batteries of the battery assembly, so as to greatly improve the discharge performance and the cycle life of the nickel-zinc battery assembly.

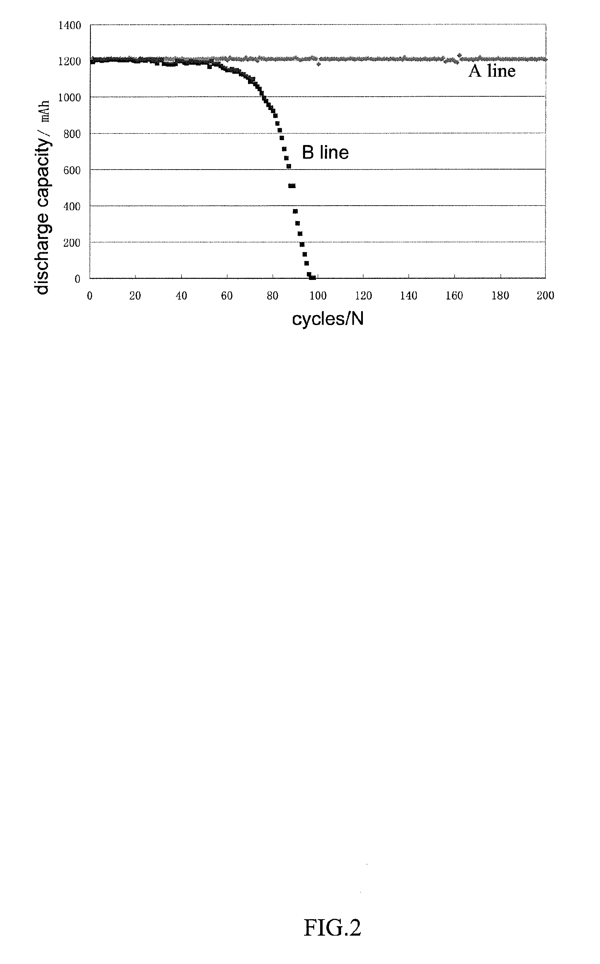

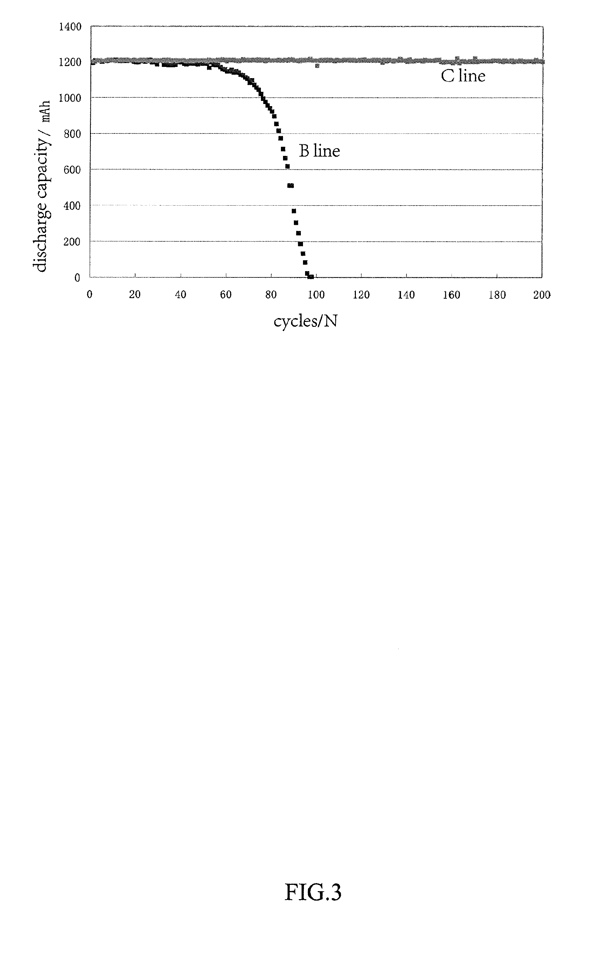

Fig.2 and Fig.3 are respectively a schematic diagram showing the cycle lives of a single cylindrical SC1200mAh nickel-zinc battery (A-line), a battery assembly made of 12 series batteries without a diode (B-line) and a battery assembly made of 12 series batteries with diodes (C-line), after they go through 200 cycles.

Fig.2 is a typical schematic diagram showing the cycle life of a single cylindrical SC1200mAh nickel-zinc battery. A line illustrates the cycle life of the single cylindrical SC1200mAh nickel-zinc battery, and B line illustrates the cycle life of the battery assembly made of SC1200mAh nickel-zinc batteries, wherein the battery assembly hasn't diodes.

Fig.3 is a typical schematic diagram showing the cycle life of the nickel-zinc batteries. B line illustrates the cycle life of the battery assembly without a diode, wherein the battery assembly is made of SC1200mAh nickel-zinc batteries, and C line illustrates the cycle life of the battery assembly with diodes, wherein the battery assembly is made of SC 1200mAh nickel-zinc batteries.

Another advantage of the invention is to provide a nickel-zinc battery assembly, wherein the nickel-zinc battery assembly comprises a plurality of nickel-zinc battery arrangements, wherein each of nickel-zinc battery arrangement comprises a nickel-zinc battery having a cathode and an anode, and a diode provided with the nickel-zinc battery.

Another advantage of the invention is to provide a nickel-zinc battery assembly, wherein the battery arrangement further comprises two connecting sheets, wherein one connecting sheet is provided between a cathode of the nickel-zinc battery and the diode and another connecting sheet is provided between an anode of the nickel-zinc battery and the diode.

Additional advantages and features of the invention will become apparent from the description which follows, and may be realized by means of the instrumentalities and combinations particular point out in the appended claims.

According to the present invention, the foregoing and other objects and advantages are attained by a nickel-zinc battery arrangement, comprising: a nickel-zinc battery and a diode, wherein the nickel-zinc battery comprises a cathode and an anode, and the diode has an negative end and a positive end, wherein the positive end of the diode is electrically connected to the cathode of the nickel-zinc battery and the negative end is electrically connected to the anode of the nickel-zinc battery.

In accordance with another aspect of the invention, the present invention further provides a method for manufacturing a nickel-zinc battery assembly, which comprising the steps of:
(1) preparing a nickel-zinc battery having a cathode and an anode, and a diode having a negative end and a positive end;
(2) connecting electrically the negative end of the diode to the anode of the nickel-zinc battery, and the positive end of the diode to the cathode of the nickel-zinc battery to define a nickel-zinc battery arrangement; and
(3) connecting two or more nickel-zinc battery arrangements to each other in series to define a nickel-zinc battery assembly.

Still further objects and advantages will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

Fig. 1 is a schematic diagram of the nickel-zinc battery according to a preferred embodiment of the present invention.
Fig.2 is a schematic diagram showing the cycle life of a single cylindrical SC1200mAh nickel-zinc battery, wherein A line illustrates the cycle life of the single cylindrical SC1200mAh nickel-zinc battery, and B line illustrates the cycle life of the battery assembly made of SC1200mAh nickel-zinc batteries, wherein the battery assembly hasn't diodes.
Fig.3 is a schematic diagram showing the cycle life of the nickel-zinc battery assembly, wherein B line illustrates the cycle life of the battery assembly without a diode, wherein the battery assembly is made of SC1200mAh nickel-zinc batteries, and C line illustrates the cycle life of the battery assembly with diodes, wherein the battery assembly is made of SC1200mAh nickel-zinc batteries.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

As shown in Fig.1, the nickel-zinc battery assembly of the present invention comprises a plurality of nickel-zinc batteries 11, a plurality of diodes 12 and a plurality of connecting sheets 13, wherein the diodes 12 are stridden across the batteries and electronically connected to the nickel-zinc batteries 11 respectively, and the connecting sheets 13 are provided between every two neighboring batteries 11 respectively, wherein the positive end 122 of the diode 12 is connected to the cathode 111 of the nickel-zinc battery 11, and the negative end 121 of the diode 12 is connected to the anode 112 of the nickel-zinc battery 11.

The nickel-zinc batteries 11 may be cylindrical nickel-zinc batteries and square nickel-zinc batteries.

The diodes 12 may be silicon diodes, germanium diodes and Schottky Barrier Diodes, and the diodes may be cylinder-shaped, square-shaped or sheet-shaped in practice. Each of the diodes 12 comprises sheet-shaped members provided respectively on the two ends thereof, and the connection between the end of the diode and the sheet-shaped member is welding or mould pressing.

The connection mode for the batteries 11 comprises series connection, parallel connection and combination thereof, as required.

The connecting sheets 13 are made of at least one material selected from the group consisting of Nickel, copper, aluminum, silver, gold material and combination thereof, wherein each of the connecting sheets has a coating provided on the connecting sheet, wherein the coating is made of at least one material selected from the group consisting of Nickel, copper, aluminum, silver, gold material and combination thereof, wherein the copper sheet can be Brass-copper, phosphor-bronze, beryllium-copper, nickel-copper sheet or the like. Each of the connecting sheets has a 0.1-0.3mm thickness.

The assembling process and method for a battery assembly are apparent to those skilled in the art. For example, welding a cathode of a battery to a positive end of a diode and welding an anode of the battery to a negative end of the diode, and then welding one end of a connecting sheet to a cathode of one battery and welding another end of the connecting sheet to an anode of another battery orderly as required, so as to obtain the anticipated battery assembly.

Incorporating the special example, the present invention is further described in detail as follows.

Example 1

The example illustrates the influence which the diode of the present invention applies on the cycle life of the nickel-zinc battery assembly.

Taking the cylindrical SC1200mAh nickel-zinc battery for an application example, the battery is measured by the following steps:

Processes for testing (Taking the SC1200mAh battery for an example):
(1) Measuring steps for a single battery:
   Step 1: discharging in a constant current of 6A, wherein the cut-off voltage is 1.2v;
   Step 2: putting aside for 60 minutes;
   Step 3: charging in a constant current of 1.2A for 30 minutes, wherein the voltage is controlled in 1.98v, and then moving on the next step;
   Step 4: charging in a constant current of 0.6A for 60 minutes, wherein the cut-off voltage is controlled in 1.98v;
   Step 5: putting aside for 15 minutes;
   Step 6: repeating from step1 to step 5, 200 cycles;
   Step 7: finished.
(2) Measuring steps for a series battery assembly assembled of 12 batteries:
   Step 1: discharging in a constant current of 6A, wherein the cut-off voltage is 12v;
   Step 2: putting aside for 60 minutes;
   Step 3: charging in a constant current of 1.2A for 30 minutes, wherein the voltage is controlled in 23.75v, and then moving on the next step;
   Step 4: charging in a constant current of 0.6A for 60 minutes, wherein the cut-off voltage is controlled in 23.75V;
   Step 5: putting aside for 15 minutes;
   Step 6: repeating from step1 to step 5, 200 cycles;
   Step 7: finished.

Repeating 200 cycles for the single nickel-zinc battery, a battery assembly made of 12 series batteries without a diode and a battery assembly made of 12 series batteries with diodes, and the typical test results are as shown in Fig.2 and Fig.3.

As shown in Fig.2, after 200 cycles are repeated, the single battery still has a capacity of 1200mAh, that is, the capacity (A line) approximately equal to one hundred percent original capacity; and when the battery assembly made of 12 series batteries undergoes 100 cycles, the capacity (B line) of the battery assembly is substantially reduced and closed to zero percent, that is, the battery is destroyed and doesn't work; but when the battery assembly is configured with a plurality of diodes, the battery assembly has a nearly one hundred percent of original capacity, even after being repeated for 200 cycles, that is, the battery assembly (C line) is under a good condition.

### Example 2

The present example illustrates that the diode of the present invention provides a protection for a battery assembly.

A diode has a unidirectional conductivity performance, and when a battery has a voltage no more than the break-over voltage of the corresponding diode, the diode doesn't work; when the battery has a voltage more than the break-over voltage of the diode, the diode is unlocked, and the corresponding battery work in a negative voltage. As shown in table 2, different diodes have different break-over voltages, so different diodes apply different effects on different diodes. Because a germanium tube is less used and has a high power consumption, so silicon diodes and Schottky diodes are only tested herein. The diode is arranged as shown in Fig.1, and the batteries are SC1200mAh nickel-zinc batteries, and the results are as shown in table 2:

**Table 2 the break-over voltages of different diodes and the protections for batteries**

| Type | Testing current (A) | Break-over voltage (mV) | Notice |
|---|---|---|---|
| 10A silicon diode 10A10 | 10 | 793 | |
| | 12 | 750 | |
| | 15 | 720 | |
| | 18 | 700 | |
| | 20 | 720 | 240 seconds , burned |
| 10A silicon diode ASA1 | 10 | 732 | |
| | 12 | 745 | |
| | 15 | 731 | 288seconds , burned |
| 12A silicon diode CSA1 | 12 | 751 | |
| | 15 | 657 | |
| | 18 | 699 | 240 seconds , burned |
| | 20 | 735 | 216 seconds , burned |
| 15A silicon diode FSA1 | 15 | 661 | |
| | 18 | 694 | |
| | 20 | 693 | 216 seconds , burned |
| 12A Schottky diode SPKC1245F | 25 | 360 | |
| | 28 | 365 | |
| | 30 | 290 | 144 seconds , burned |
| 12A Schottky diode GDSB1240 | 40 | 270 | |
| | 50 | 280 | |
| 15A Schottky diode GDSB 1545 | 20 | 350 | |
| | 30 | 328 | |
| | 35 | 300 | |
| | 40 | 310 | |
| | 50 | 300 | |
| | 55 | 300 | 79 seconds , burned |
| | 60 | 350 | 72 seconds , burned |
| 10A Schottky diode SBM1045VSS | 25 | 366 | |
| | 30 | 350 | |
| | 35 | 340 | |
| | 40 | 330 | |
| | 45 | 320 | 96 seconds , burned |
| | 50 | 220 | 86 seconds , burned |

The testing results that the silicon diode has a break-over voltage of about 0.7V and the Schottky diode has a break-over voltage of about 0.3V can be seen, as shown in table. Therefore, if the silicon diode is used as the protective means, only when the voltage applied on the cathode of the nickel-zinc battery is not more than -0.7V, the diode is capable to work for protecting and keep the voltage applied on the two ends of the battery in- 0.7V, according to the connection shown in Fig.1, that is, the nickel-zinc battery is able to work in a voltage range of -0.7V; if the Schottky diode is used as the protective means, only when the voltage applied on the cathode of the nickel-zinc battery is not more than -0.3V, the diode is capable to work for protecting and keep the voltage applied on the two ends of the battery in- 0.7V, according to the connection shown in Fig.1, that is, the nickel-zinc battery is able to work in a voltage range of -0.7V.When discharging, the battery which works in a negative potential (that is anti-pole) is easy to be destroyed, and the voltage is lower, the battery is easier to be destroyed. After the massive test experiments are finished, we found when the silicon is used as the protective means, even if the voltage is low to -0.7V, the nickel-zinc battery is difficult to be destroyed. The Schottky diode can be used for replacing the silicon diode in the high-end fields.

In other words, the present invention provides a nickel-zinc battery arrangement 10 adapted for manufacturing a nickel-zinc battery assembly, wherein the nickel-zinc battery arrangement 10 comprises a nickel-zinc battery 11 and a diode 12, wherein the nickel-zinc battery 11 comprises a cathode 111, an anode 112, the diode 12 comprises an negative end 121 and a positive end 122, wherein the negative end 121 of the diode 12 is electrically connected to the anode 112 of the nickel-zinc battery 11, and the positive end 122 of the diode 12 is electrically connected to the cathode 122 of the nickel-zinc battery 11, as shown in FIG.1 to FIG.3. Therefore, the present invention further provides a nickel-zinc battery assembly comprises a plurality of nickel-zinc battery arrangements 10, wherein the nickel-zinc battery arrangements 10 are connected to each other in series or in parallel.

Further, the present invention provides a method for manufacturing a nickel-zinc battery assembly, which comprising the steps of:
(1) preparing a nickel-zinc battery having a cathode and an anode, and a diode having a negative end and a positive end;
(2) connecting electrically the negative end of the diode to the anode of the nickel-zinc battery, and the positive end of the diode to the cathode of the nickel-zinc battery to define a nickel-zinc battery arrangement; and
(3) connecting two or more nickel-zinc battery arrangements to each other in series to define a nickel-zinc battery assembly.

One skilled in the art will understand that the embodiment of the present invention as shown in the drawings and described above is exemplary only and not intended to be limiting.

It will thus be seen that the objects of the present invention have been fully and effectively accomplished. The embodiments have been shown and described for the purposes of illustrating the functional and structural principles of the present invention and is subject to change without departure from such principles. Therefore, this invention includes all modifications encompassed within the spirit and scope of the following claims.

## Claims

1. A nickel-zinc battery assembly, comprising:
a plurality of nickel-zinc batteries,
a plurality of diodes; and
a plurality of connecting sheets, wherein the diodes are respectively corresponding to the nickel-zinc batteries, and each of the diodes is stridden across and electronically connected to the corresponding nickel-zinc battery, wherein the connecting sheets are provided between every two neighboring batteries respectively, and the positive end of the diode is connected to the cathode of the corresponding nickel-zinc battery, and the negative end of the diode is connected to the anode of the corresponding nickel-zinc battery.

2. The nickel-zinc battery assembly, as recited in claim 1, wherein the nickel-zinc batteries are cylindrical nickel-zinc batteries or square nickel-zinc batteries.

3. The nickel-zinc battery assembly, as recited in claim 1 or 2, wherein the diodes are silicon diodes, germanium diodes, Schottky Barrier Diodes or combination thereof, and the diodes are cylinder-shaped, square-shaped or sheet-shaped.

4. The nickel-zinc battery assembly, as recited in claim 3, wherein each of the diodes comprises sheet-shaped members provided respectively on two ends thereof, and the connection between an end of the diode and a sheet-shaped member is welding or mould pressing.

5. The nickel-zinc battery assembly, as recited in any of claims 1 to 4, wherein the connection mode for the batteries comprises series connection, parallel connection and combination thereof.

6. The nickel-zinc battery assembly, as recited in any of claims 1 to 5 , wherein the connecting sheets are made of at least one material selected from the group consisting of nickel, copper, aluminum, silver, gold material and combination thereof, wherein each of the connecting sheets comprises a sheet-shaped element and a coating provided on the sheet-shaped element, wherein the coating is made of at least one material selected from the group consisting of nickel, copper, aluminum, silver, gold material and combination thereof, wherein the copper sheet is made of brass-copper, phosphor-bronze, beryllium-copper, or nickel-copper material.

7. The nickel-zinc battery assembly, as recited in claim 6, wherein each of the connecting sheets has a 0.1 ∼0.3mm thickness.

8. A nickel-zinc battery assembly, comprising a plurality of nickel-zinc battery arrangements, wherein the nickel-zinc battery arrangements are connected to each other in series or in parallel, wherein each of the nickel-zinc battery arrangement comprises a nickel-zinc battery and a diode, wherein the nickel-zinc battery comprises a positive end, an anode, the diode comprises an negative end and a positive end, wherein the negative end of the diode is electrically connected to the anode of the nickel-zinc battery, and the positive end of the diode is electrically connected to the cathode of the nickel-zinc battery.

9. The nickel-zinc battery assembly, as recited in claim 8, wherein the diode is a silicon diode, a germanium diode and a Schottky diode.

10. The nickel-zinc battery assembly, as recited in claim 8 or 9, wherein the diode is cylinder-shaped, square-shaped or sheet-shaped.

11. A nickel-zinc battery arrangement, comprising a nickel-zinc battery and a diode, wherein the nickel-zinc battery comprises a positive end, an anode, and the diode comprises an negative end and a positive end, wherein the negative end of the diode is electrically connected to the anode of the nickel-zinc battery, and the positive end of the diode is electrically connected to the cathode of the nickel-zinc battery.

12. A method for manufacturing a nickel-zinc battery assembly, comprising the steps of:
(1) preparing a nickel-zinc battery having a cathode and an anode, and a diode having a negative end and a positive end;
(2) connecting electrically the negative end of the diode to the anode of the nickel-zinc battery, and the positive end of the diode to the cathode of the nickel-zinc battery to define a nickel-zinc battery arrangement; and
(3) connecting two or more nickel-zinc battery arrangements to each other in series to define a nickel-zinc battery assembly.
